Europäisches Patentamt

European Patent Office

Office européen des brevets

(11) Publication number: **0 508 456 A1**

# EUROPEAN PATENT APPLICATION

(21) Application number: **92106246.9**

(22) Date of filing: **10.04.92**

(51) Int. Cl.5: **F16L 25/00, F24F 13/02**

(30) Priority: **11.04.91 FI 911753**

(43) Date of publication of application:
**14.10.92 Bulletin 92/42**

(84) Designated Contracting States:
**AT BE CH DE DK ES FR GB GR IT LI LU MC NL PT SE**

(71) Applicant: **AB FLÄKT OY**
**Mäkitorpantie 1-3**
**Sf-00620 Helsinki(FI)**

(72) Inventor: **Ekman, Christer**
**Aisakatu 8 as. 2**
**SF-20780 Kaarina(FI)**
Inventor: **Tuominen, Lasse**
**Räntämäenkatu 37**
**SF-20300 Turku(FI)**

(74) Representative: **Görg, Klaus, Dipl.-Ing. et al**
**Hoffmann, Eitle & Partner Arabellastrasse 4**
**(Sternhaus)**
**W-8000 München 81(DE)**

(54) A connection piece for an air duct system or the like.

(57) The invention relates to a connection piece for interconnecting two air duct elements (19). The object is to provide a new connection piece which is easier to install than prior art connection pieces. A characteristic feature of the connection piece (20) is that its diameter is reduced before installation by deforming its wall.

FIG.8

The invention relates to a connection piece for an air duct system or the like for interconnecting two duct elements.

Air-conditioning ductwork systems and other such ductwork systems are made of prefabricated elements interconnected for the transport of air and gas. Such ductwork systems typically have wide form and installation tolerances, a large size, in a round duct, for instance, a diameter of 63 to 1,250 mm, and a thin sheet metal wall of 0.5 - 1,24 mm. The elements are usually interconnected one by one during installation.

Above all, a finished joint has to be tight and mechanically strong, in addition to which it should have a low air resistance. The different tolerances are relatively narrow.

A good joint is difficult to accomplish, as the cut surfaces of the duct elements are sharp and uneven, and the outer surface of the ductwork is uneven. In practice, the tolerances usually refer to the length of the periphery of the duct due to the thin duct wall material. The final shape may vary with resultant diameter variations. For instance, when the duct runs in a riser shaft or in a false ceiling space so that one or more peripheral sections of the duct are mounted against other structures, the duct can often be accessed in one direction only.

Such problems are further aggravated when duct elements are joined into a larger structural unit, when the duct is large and heavy, when the duct elements are mounted in a structural element, or when a structural duct in a structural element is used. The duct elements are interconnected after the installation and anchoring of the structural units.

Known joints include a sleeve joint, a telescopic joint, a clamping sleeve joint, a guide slip joint and a flange joint. A rubber or plastic strip, tape, shrunk-on collar or putty is used as a seal. Tape and putty require space, which hampers the fastening; on ageing, the durability of putty deteriorates.

Problems associated with the sleeve joint include the installation and form tolerances, lack of space, friction, and the sensitivity of the seal to damages.

Problems with the telescopic joint include the installation and form tolerances, lack of space, and the sensitivity of the seals to damages. In addition, the telescopic joint is relatively expensive.

With the shrunk-on collar joint, problems are caused by the manufacturing seams on the outer surface, lack of space, limited access, structures in contact with the duct, and installation tolerances.

The guide slip joint is problematic in that it requires space on the sides of the duct and its use is limited to square ducts.

Problems with the flange joint include the space requirement on the sides of the duct and the installation tolerances.

The object is to provide a new connection piece for air-conditioning ductwork systems and other such systems, by means of which a durable and sufficiently tight joint can be accomplished more easily than previously.

The connection piece according to the invention is mainly characterized in that the diameter of the connection piece, that is, its nominal size, is reduced before installation by deforming the wall of the connection piece.

The shape of the connection piece according to the invention changes considerably in installation, whereas its peripheral dimension remains constant. The connection piece is easy to move and pass through the ductwork system. A space required by one hand is enough for easy accessibility, and so the peripheries of the ducts to be interconnected can be in contact with the surrounding structures. The seals are not damaged when the connection piece is moved, and the installation or form tolerances do not impede the installation; the length of the piece is determined by the side tolerances.

The connection piece according to the invention also provides a required press force for the seals, as the final shape of the connection piece corresponds to the shape of the duct with a sufficient tolerance.

In a preferred embodiment of the invention, the wall of the connection piece is deformed without exceeding the elastic limit, and an openable band or other such device is fitted around the connection piece to maintain the deformed shape.

Alternatively, the wall of the connection piece can be deformed in a manner permanent *per se* by bending it inward at least at one point. Preferably, a means for straightening the bend is provided at the bending point. A material weakening can be made at the bending point to decrease the rigidity, in which case the shape restoring means is preferably provided with a seal within the weakened area.

The connection piece can comprise one or more peripheral portions.

In the following the invention will be described with reference to the attached drawings.

Figures 1 to 4 show installations in which the connection piece according to the invention can be used especially advantageously.

Figures 5 to 7 illustrate generally the different installation stages of the connection piece.

Figure 8 illustrates the applicability of the connection piece with different duct cross-sections.

Figures 9 to 11 illustrate embodiments in which the wall of the connection piece is deformed without exceeding the elastic limit.

Figures 12 to 19 illustrate embodiments for expanding a connection piece wall bent permanently inward.

Figures 20 to 22 show examples of weakenings made within the area of the bending point of the wall.

Figures 23 and 24 illustrate an embodiment in which a seal is fitted within the area of the weakening.

Figures 25 and 26 illustrate two embodiments in which the connection piece comprises several portions.

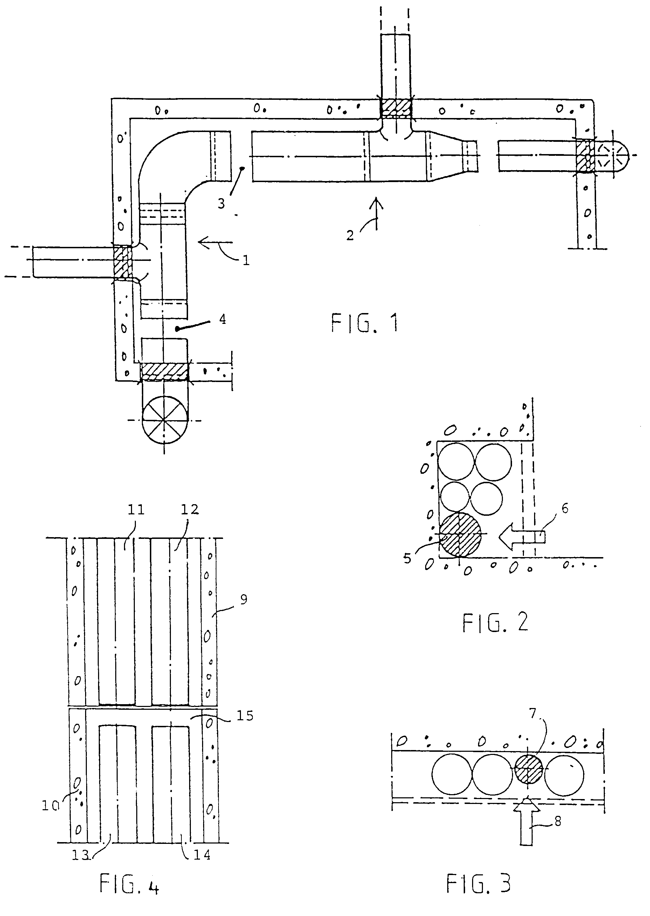

In Figure 1, ducts joined into larger structural units have been installed in the direction of the arrows 1 and 2; the connection points are positioned within the wall. The reference numerals 3 and 4 designate points at which connection pieces are to be installed.

Figure 2 shows a riser shaft. The reference numeral 5 designates a duct to be installed, and the arrow 6 indicates the direction of access.

Figure 3 shows a false ceiling space. A duct to be installed is designated with the reference numeral 7, and the direction of access is designated with the arrow 8.

Figure 4 shows two building units 9 and 10, within which ducts 11 to 14 have been installed e.g. already at the prefabrication stage. The reference numeral 15 designates a point at which a connection piece is to be installed.

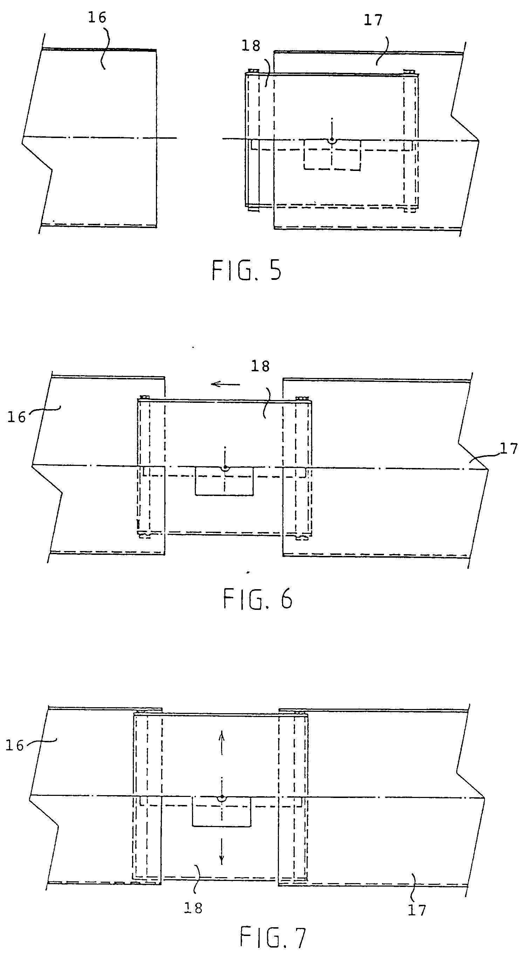

In Figures 5 to 7, the reference numerals 16 and 17 designate two duct elements to be interconnected. A connection piece is designated with the reference numeral 18. The duct elements 16 and 17 may be fixedly installed before being interconnected, in which case the connection piece 18, if it cannot be passed in through the gap between the duct elements 16 and 17, may be positioned in advance within one duct element, or it may be passed into a position shown in Figure 5 through the other end of this duct element. The connection piece can be passed into a position shown in Figure 6 easily by one hand, whereafter the connection piece 18 is allowed to expand or is expanded to its final position shown in Figure 7, so that it connects the duct elements 16 and 17 tightly together.

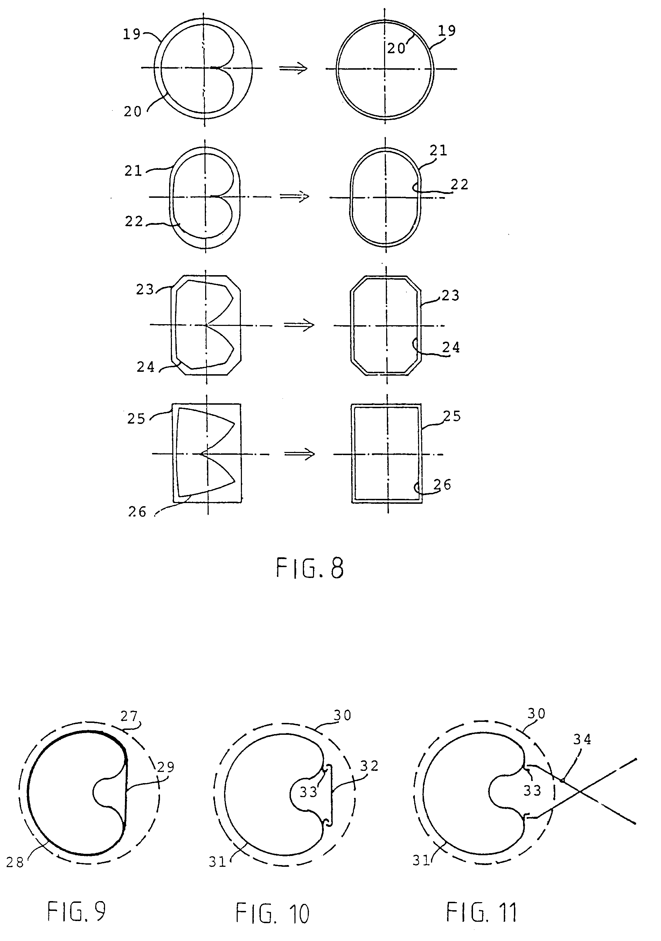

Figure 8 shows the applicability of the invention with ducts of different cross-sections. The reference numerals 19, 21, 23 and 25 designate the respective duct elements and the reference numerals 20, 22, 24 and 26 the respective connection pieces.

In Figure 9, the reference numeral 27 designates a duct element and the reference numeral 28 designates a connection piece. The nominal size of the connection piece 28 is reduced by deforming the wall without exceeding the elastic limit of the material; by opening a band 29 or the like fitted around the connection piece, the connection piece is expanded so that it is positioned tightly against the surrounding duct element 27.

In Figures 10 and 11, the reference numeral 30 designates a duct element, and 31 designates an elastically deformed connection piece. The band shown in Figure 9 is replaced with a retainer 32 engaged with hooks 33. To facilitate the releasing of the retainer 32 and the handling of the connection piece, tongs 34 can be used, as shown in Figure 11.

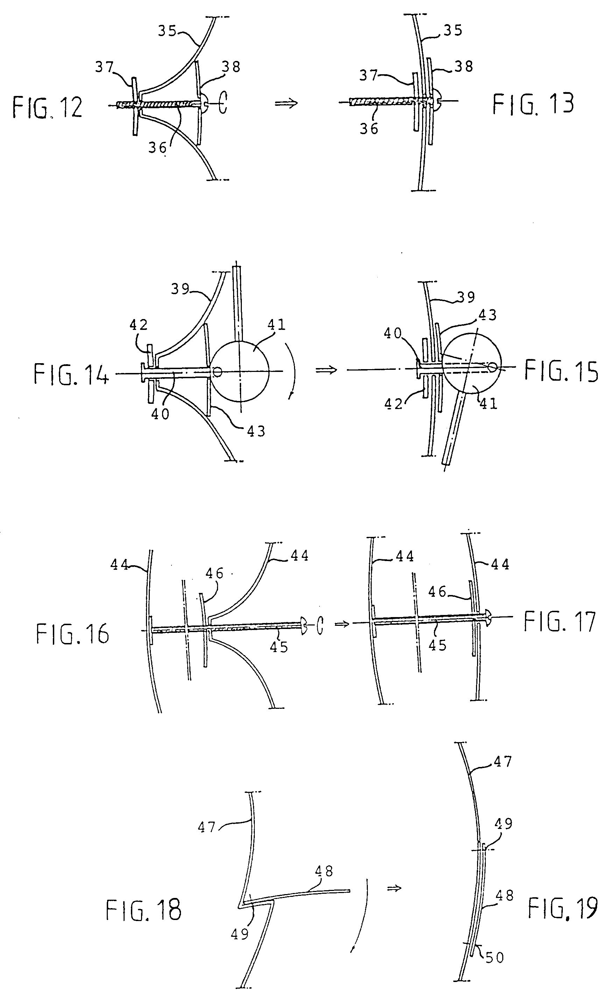

In Figure 12, a wall 35 of a connection piece is bent inward permanently. A screw 36 is driven through the bending point, and a support plate 37 is screwed on the screw inside the connection piece and an abutment plate 38 is supported against the head of the screw. By tightening the screw 36, the support plate 37 straightens the bend of the wall 35 of the connection piece in cooperation with the abutment plate 38, as shown in Figure 13.

In principle, the embodiment shown in Figures 14 and 15 is similar to that described above. A pin 40 provided with an eccentric 41 is passed through the bending point of a wall 39. When the eccentric 41 is turned from a position shown in Figure 14 to a position shown in Figure 15, a support plate 42 attached to the pin 40 inside the connection piece follows it, thus straightening the wall 39 against a plate 43.

In an alternative embodiment shown in Figures 16 and 17, a wall 44 of a connection piece is straightened by means of a screw 45 driven through the bending point and bearing against an opposite wall portion, and a plate 46 screwed on the screw 45. When the screw 45 is "tightened", the plate 46 rises against the head of the screw 45, as shown in Figure 17.

In the embodiment shown in Figure 18, a step-like bend is made in a wall 47 of a connection piece. An arm 48 is attached to the step surface of the bend by a rivet joint or a screw joint 49, for instance. To straighten the wall 47, the arm 48 is turned into contact with the wall 47, as shown by the arrow in Figure 18, and locked to it by fastening means 50.

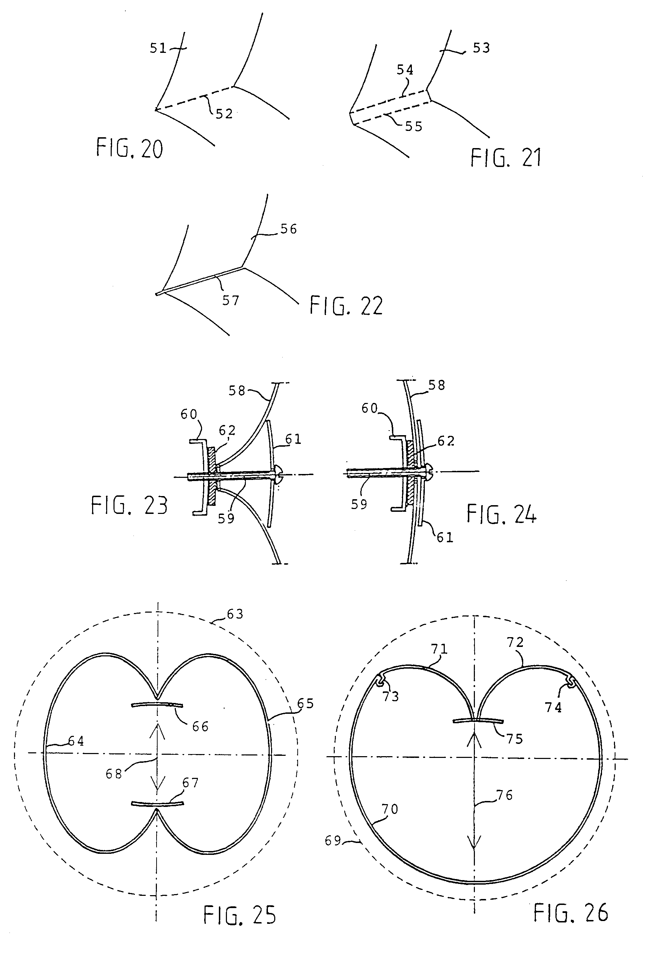

Figures 20 to 22 show examples of material weakenings 52, 54 and 55 made at the bending point of a wall 51, 53 and 56, respectively, to facilitate the straightening of the wall. The weakenings may be e.g. perforations.

The material weakenings may cause leakage. Such leakage can be eliminated e.g. as shown in Figures 23 and 24. A seal 62 is positioned between a wall 58 of a connection piece and a plate 60 screwed onto a screw 59 passing through the bending point of the wall 58. When the screw 59 is tightened, the seal 62 is squeezed between the plate 60 and the wall 58 supported by an abutment plate 61.

The connection piece according to the invention may also comprise more than one peripheral portions. Figures 25 and 26 show two examples. In Figure 25, the duct element is designated with the reference numeral 63, and the connection piece comprises two peripheral portions 64 and 65 interconnected by plates 66 and 67 positioned inside the connection piece. The arrow 68 designates means for straightening the wall of the connection piece, e.g. one of the straightening means shown in Figures 12 to 17. In Figure 26, a duct element is designated with the numeral 69, and the connection piece comprises three peripheral portions 70, 71 and 72. The peripheral portions 71 and 72 forming the bending point itself are connected to the peripheral portion 70 by means of hooks 73 and 74 or the like, and they are interconnected by means of a support plate 75 provided inside the connection piece. The arrow 76 designates a means for straightening the wall of the connection piece.

## Claims

1. A connection piece for interconnecting two duct elements, **characterized** in that the diameter of the connection piece, that is, its nominal size, is reduced before installation by deforming the wall of the connection piece.

2. A connection piece according to claim 1, **characterized** in that its wall is deformed without exceeding the elastic limit and that a removable band (29) or other similar means (32) is fitted around the connection piece to maintain the deformed shape.

3. A connection piece according to claim 1, **characterized** in that its wall is deformed in a manner permanent *per se* by bending it inward at least at one point, and that a device (36, 37, 38) is provided at the bending point to straighten the bend.

4. A connection piece according to claim 3, **characterized** in that at least one weakening (52; 54, 55) facilitating the straightening is made at the bending point.

5. A connection piece according to claim 3 and 4, **characterized** in that the device for straightening the bend is provided with a seal (62) within the area of the weakening.

6. A connection piece according to any of the preceding claims, **characterized** in that it comprises more than one peripheral portions (64, 65; 70, 71, 72).

7. A connection piece according to any of claims 2 to 6, **characterized** in that the device for expanding the connection piece is positioned substantially centrally in the connection piece in the longitudinal direction.

FIG. 1

FIG. 2

FIG. 4

FIG. 3

FIG. 5

FIG. 6

FIG. 7

FIG. 8

FIG. 9          FIG. 10          FIG. 11

FIG. 12 ⇒ FIG. 13

FIG. 14 ⇒ FIG. 15

FIG. 16 ⇒ FIG. 17

FIG. 18 ⇒ FIG. 19

FIG. 20

FIG. 21

FIG. 22

FIG. 23

FIG. 24

FIG. 25

FIG. 26

9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 221 010 (MEASURING & CONTROL EQUIPMENT)<br>* the whole document *<br>--- | 1-4,6,7 | F16L25/00<br>F24F13/02 |
| X | US-A-2 977 994 (C. P. XENIS)<br>* column 1, line 69 - column 2, line 26; figures 1-8 *<br>--- | 1-7 | |
| A | DE-A-3 507 393 (J. N. EBERLE FEDERFABRIK)<br>* abstract *<br>----- | 1 | |

| | | | TECHNICAL FIELDS SEARCHED (Int. Cl.5) |
|---|---|---|---|
| | | | F16L<br>F24F |

The present search report has been drawn up for all claims

| Place of search | Date of completion of the search | Examiner |
|---|---|---|
| THE HAGUE | 26 JUNE 1992 | ANGIUS P. |

EPO FORM 1503 03.82 (P0401)